# EUROPEAN PATENT APPLICATION

(11) **EP 4 806 610 A1**
(43) Date of publication of application: **16.09.2026**
(21) Application number: 25158865.3
(22) Date of filing: 19.02.2025
(51) Int. Cl.: B27N 3/02, B27N 3/04, B27N 3/18, B27N 9/00, C01B 32/21, C01B 32/225, C08K 9/10, C09C 1/46, B27N 3/00

(54) **ENGINEERED WOOD PRODUCT COMPRISING ENCAPSULATED EXPANDABLE GRAPHITE**

(71) Applicant: Niederstadt Rule, 86167 Augsburg (DE)
(72) Inventor:
(74) Representative: Meissner Bolte Partnerschaft mbB

(57) **Abstract**

An engineered wood product comprises wooden elements glued together using a binder to obtain a composite structure, the binder being selected from a phenoplast and an aminoplast, wherein the binder has, at least in localized regions thereof, dispersed therein expandable graphite encapsulated into an encapsulating material. For obtaining a desired flame protection level, only low dosages of the encapsulated expandable graphite are required.

## Description

The present invention relates to an engineered wood product comprising encapsulated expandable graphite, a method for preparing the engineered wood product, and a method for preparing the encapsulated expandable graphite.

The construction industry uses huge amounts of building materials such as concrete, steel, plaster and aluminum. In addition to such inflammable building materials, however, also flammable materials are used, such as wood-based building materials. Wood-based materials are very popular as they are relatively inexpensive and constitute renewable raw materials. Their use is desirable to replace at least a part of conventional and non-renewable building materials such as concrete, steel, plaster or aluminum. When using flammable building materials, it is at least advisable or even mandatory to provide flame retardant technologies, i.e. to protect the flammable building materials against fire.

A variety of flame retardants are known, e.g. halogenated flame retardants, ammonium salts, phosphorus compounds, mineral flame retardants, anorganic salts etc. Flame retardants with additives are also often used. Both the flame retardants and the additives should ideally be of a natural and/or biodegradable nature in the interests of sustainability, in particular to find a broad acceptance in the public. For use in the construction sector, flame retardants and additives should also not impair important aspects such as moisture resistance and swelling of the engineered wood product to which they are applied.

Many common flame retardants such as organo-halogens, boric acid or borates are unsuitable for use on wood-based materials as they have been classified as hazardous on the SVHC list. Ammonium salts, such as ammonium phosphate, ammonium polyphosphates or ammonium sulfate, are often used as flame retardants for wood-based materials. These salts are mixed with chips, fibers or strands as well as adhesives, layered on large presses and then pressed at elevated temperatures.

However, the use of ammonium salts as flame retardants for wood-based materials has many disadvantages: The salts must be used in high amounts in order to achieve a sufficient flame retardant effect. The flame retardant effect can be detected in the Single Burning Item (SBI) test as Fire Growth Rate (FIGRA) and Total Heat Release (THR). The resulting high levels of salt incorporation in natural materials leads to increased moisture absorption. In addition, the neutral to slightly acidic pH value of the ammonium groups leads to an increase in the viscosity of binders (e.g. wood glues) used, which is undesirable as it also reduces the stability of the binders. Furthermore, ammonium salts can undergo a chemical reaction with formaldehyde contained in common binders. The ammonium group, which is partly present as ammonia in the alkaline pH of the binders, reacts with the formaldehyde of the resins. This reaction reduces the adhesive strength, which requires a higher dosage of binders for flame-retardant wood-based materials. Finally, governmental regulations require a further reduction of free formaldehyde content, urging producers to reduce the use of formaldehyde binders, which is more challenging when using ammonium salts. Another disadvantage of ammonium salts is their mechanism of action, in that the cellulose is not burnt to carbon dioxide during firing, but is instead partially converted to carbon. While the carbon then protects against the spread of fire, carbonization itself also generates energy. The principle of carbonization is used in many ways, but large quantities of ammonium salts are required to achieve the fire standards.

An alternative flame retardant is expandable graphite. Expandable graphite is produced from naturally occurring mineral graphite. The layered structure of graphite allows some compounds to be intercalated between the graphite layers. Through intercalation of acids such as sulfuric acid, graphite can be converted into expandable graphite. There is no carbonization when using expandable graphite. Expandable graphite is already present as a carbon layer and is expanded during flame treatment. This expansion process removes heat and the carbon foam produced is a good insulator. Significantly more insulating mass is produced than by converting cellulose with ammonium salts. The protective layer on the surface permanently prevents burning and the release of heat during the fire protection test.

Nevertheless, the use of expandable graphite in wood-based materials is currently not common, as the material has undesirable processing properties. On the one hand, expandable graphite with intercalated sulfuric acid naturally has an acidic pH and can additionally contain a residual content of adhering sulfuric acid. Acidic environment can lead to stability problems when using expandable graphite in binders (e.g. wood glue; see above). In addition, expanded graphite forms dust that can settle on equipment, adhere statically to surfaces and can subsequently be difficult to remove.

EP 3 680 096 A1 describes a fire-retardant surface element has alternating layers (a) of a mineral fiber sheet and (b) a fire protection composition which comprises an organic binder with an intumescent material dispersed therein. The mineral fiber fabrics are fabrics made of unconsolidated basalt fibers. The fire protection compound is a solidified, foamed polymer dispersion with expanded graphite dispersed in it.

EP 3 323 576 B1 describes a method for producing fire-retardant insulation boards/mats and fire-retardant blown-in insulation material made of fibers based on renewable raw materials. The insulation board/mat or the blown-in insulation material is made from a mixture that contains fibers based on renewable raw materials and a physical and/or chemical fire retardant. Among the fire retardants, expandable graphite can be used.

It is therefore an object of the present invention to provide a flame retardant engineered wood product with a highly effective flame retardant based on expandable graphite which overcomes the above-mentioned shortcomings. Specifically, the engineered wood product should have a class B combustibility according to EN 13501. The flame retardant (and the engineered wood product) should be inexpensive and easily preparable. It is desirable that the flame retardant can easily be integrated into existing processes for preparing engineered wood products. Specifically, the flame retardant should be easy to process, e.g. easy to dose, and not form dust that can settle on equipment or adhere statically to surfaces. Finally, the flame retardant should be highly compatible with resins and binders (e.g. wood glues). Especially, it should not reduce or even enhance binder adhesive strength.

This object is solved by an engineered wood product comprising wooden elements coated and/or glued together using a binder, to obtain a composite structure, the binder being selected from a phenoplast and an aminoplast, wherein the binder has, at least in localized regions thereof, dispersed therein expandable graphite encapsulated into an encapsulating material.

The invention further relates to a method for preparing an engineered wood product, the method comprising the steps of:
a) mixing and/or coating wooden elements with a binder selected from a phenoplast and an aminoplast,
b) assembling the mixed and/or coated wooden elements to form an assembly, and
c) pressing the assembly to obtain the engineered wood product, wherein the binder has, at least in localized regions thereof, dispersed therein expandable graphite encapsulated into an encapsulating material.

The invention further relates to a method for preparing encapsulated expandable graphite, the method comprising the steps of:
a) dispersing expandable graphite in an encapsulating agent, the encapsulating agent being selected from a polymer latex, a polymer solution or a polymer melt to obtain a dispersion, and
b) drying the dispersion to obtain the encapsulated expandable graphite.

It has been found that by applying in the preparation of the inventive engineered wood product the binder which has, at least in localized regions thereof, dispersed therein expandable graphite encapsulated into an encapsulating material ("encapsulated expandable graphite"), an engineered wood product having a class B combustibility according to EN 13501 is obtained.

For obtaining a desired flame protection level, only low dosages of the encapsulated expandable graphite are required. Hence, it can be incorporated in low dosages rendering the technology comparatively inexpensive. The encapsulated expandable graphite is easily preparable. The encapsulated expandable graphite is a free-flowing solid which is easily processable and can be dosed accurately, and can thus easily be integrated into existing methods for preparing engineered wood products.

It has surprisingly been found that the encapsulated expandable graphite can form agglomerates with moisture retained therein compared to untreated expandable graphite particles. This results in encapsulated expandable graphite having antistatic properties. The encapsulated expandable graphite does therefore not form dust that can settle on equipment or adhere statically to surfaces. As the encapsulated expandable graphite is mixed with the binder and embedded in a solid composite during pressing, the encapsulated expandable graphite particles cannot be released during the life cycle of the engineered wood product. Dust problems therefore do neither occur during the production of the encapsulated expandable graphite nor during the subsequent use of the engineered wood products containing it. This avoids or at least reduces the risk of slipping, air pollution and the need for cleaning.

The encapsulated expandable graphite does not contain ammonium ions. Therefore, there is no interaction with formaldehyde of the phenoplast and/or aminoplast binder and consequently, the binder strength is not reduced by the formation of urotropine or ammonia-formaldehyde adducts. Furthermore, as outlined above, acidic pH values in formaldehyde resins can result in an acid-induced viscosity increase due to premature onset of crosslinking, which should be avoided. It has surprisingly been found that this can be avoided as aqueous dispersions of the encapsulated expandable graphite have a basic pH value, typically in the range of 8 to 10. Thus, the encapsulated expandable graphite is highly compatible with the phenoplast and the aminoplast binders used in the inventive engineered wood products.

According to the invention, an engineered wood product comprises wooden elements glued together using a binder, to obtain a composite structure, the binder being selected from a phenoplast and an aminoplast, wherein the binder has, at least in localized regions thereof, dispersed therein expandable graphite encapsulated into an encapsulating material.

### Wooden elements

The engineered wood product of the invention contains wooden elements. The wooden elements are not particularly limited meaning that any wood material-based elements can be used. In an embodiment, the wooden elements include chips, fibres, flakes, lumber, particles, strands, sawdust, veneer, wood flour, and mixtures thereof.

### Binder

The binder is selected from a phenoplast and an aminoplast.

Generally, a "phenoplast" (also referred to as "phenolic resin") is a phenol formaldehyde resin, i.e. a resin obtained by reaction of phenol or substituted phenol with formaldehyde. In an embodiment, the phenoplast is a phenol-formaldehyde resin. Non-limiting examples of phenols which may be used to form phenolic resins are phenol, butyl phenol, xylenol and cresol. General preparation of phenolic resins is described in "The Chemistry and Application of Phenolic Resins or Phenoplasts", Vol V, Part I, edited by Dr Oldring; John Wiley and Sons/Cita Technology Limited, London, 1997.

Suitable examples of commercially available phenolic resins include, but are not limited to those sold under the trade name PHENODUR^{®} (available from Allnex), such as PHENODUR EK-827, PHENODUR VPR1785, PHENODUR PR 515, PHENODUR PR516, PHENODUR PR 517, PHENODUR PR 285, PHENODUR PR612 or PHENODUR PH2024; resins sold under the trade name BAKELITE^{®} (available from Sumitomo Bakelite co., Itd.), such as BAKELITE 6582 LB, BAKELITE 6535, BAKELITE PF9989 or BAKELITE PF6581; SFC 112 (available from SI Group); DUREZ (RTM) 33356 (available from SHHPP); ARALINK^{®} 40-852 (available from Bitrez); Resol 705703L (available from Prefere Resins Germany GmbH); or combinations thereof.

Generally, an "aminoplast" is a resin obtained by polycondensation of an amine with formaldehyde. Typical amines are selected from urea, melamine, dicyandiamide etc. In an embodiment, the aminoplast is selected from urea-formaldehyde resins, melamine-formaldehyde resins, and mixtures thereof. Suitably, these condensates may be etherified, typically, with methanol, ethanol, butanol or mixtures thereof. For the chemistry, preparation and use of aminoplast resins, see "The Chemistry and Applications of Amino Crosslinking agents or Aminoplast", Vol. V, Part 11, page 21 ff., edited by Dr. Oldring; John Wiley & Sons/Cita Technology Limited, London, 1998. Suitable examples of commercially available aminoplast resins include, but are not limited to, those sold under the trade name MAPRENAL^{®}, such as MAPRENAL MF980 (available from Ineos); those sold under the trade name CYMEL^{®}, such as CYMEL 303 and CYMEL 1128 (available from Allnex Industries); MADURIT MW 116/76WA (available from Prefere Melamines GmbH); and combinations thereof.

The engineered wood product of the invention involves a binder which has, at least in localized regions thereof, dispersed therein expandable graphite encapsulated into an encapsulating material. Herein, the expandable graphite encapsulated into an encapsulating material is, for abbreviation, also referred to as "encapsulated expandable graphite".

### Expandable graphite

Expandable graphite is an intumescent material. An intumescent material is a material that swells as a result of heat exposure, leading to an increase in volume and decrease in density. Intumescent materials are typically used in passive fire protection, i.e. as flame retardants.

Expandable graphite is commercially available and can be produced from naturally occurring mineral graphite. Such graphite has layers of carbon atoms arranged in a honeycomb pattern. Within the layers, the atoms are connected by covalent bonds. Between the layers, weak chemical bonds prevail allowing for some compounds to be intercalated between the layers (generally referred to as "intercalant materials").

Examples of intercallant materials include halogens, alkali metals, sulfates, nitrates, various organic acids, aluminum chlorides, ferric chlorides, other metal halides, arsenic sulfides, and thallium sulfides. Preferably, the intercallant material is a non-halogenated intercallant material. Commercially available expandable graphite often comprises an acid such as sulfuric acid as intercallant material. Preparing expandable graphite comprising sulfuric acid as intercallant material typically involves treating highly crystalline natural flake graphite with sulfuric acid.

The expandable graphite may have a carbon content of at least 70%, preferably at least 80%, more preferably at least 85%, in particular at least 90%, in particular at least 95%, in particular at least 99%.

The expandable graphite may have a sulfur content in the range of 0 to 8%, such as 2.6 to 5.0%, or 3.0 to 3.5%.

The expandable graphite may have an expansion ratio (cm³/g) in the range of 10:1 to 500:1, such as 20:1 to 450:1, or 30:1 to 400:1, or 50:1 to 350:1. The expansion rate is defined herein as the ratio of the volume of expanded graphite (i.e. of expandable graphite after expansion) to the volume of expandable graphite (i.e. of expandable graphite before expansion).

In an embodiment, the expandable graphite has a grain size of 100 to 400 µm, preferably 150 to 300 µm. Applying expandable graphite having said grain size in engineered wood products reduces "sliding" of the wooden elements, e.g. the fibers, from one another, which in turn increases adhesion in the engineered wood product, e.g. in the medium-density fiberboard (MDF).

Useful commercially available examples of expandable graphite include Expandable graphite grade 95100250 (available from LIANYUNGANG EAST SUN INTERNATIONAL), GHL PX 90/80N (available from Georg H. Luh GmbH), HPMS Expandable Graphite (available from HP Materials Solutions) and Expandable Graphite Grades 1721 (available from Asbury Carbons).

### Encapsulation and encapsulating material

Expandable graphite encapsulated into an encapsulating material (encapsulated expandable graphite) is used in the engineered wood product.

The term "encapsulated" in the context of expandable graphite denotes that one expandable graphite particle or more than one expandable graphite particles (which may be connected to form an agglomerate) are embedded in encapsulating polymer, although there may be some portions that are thinly covered or not at all covered by the encapsulating polymer: The encapsulating material may cover a part or essentially the complete surface of the one expandable graphite particle or the more than one expandable graphite particles. Preferably, the encapsulating material forms a substantially closed shell around the surface of the one expandable graphite particle or the more than one expandable graphite particles.

The nature of the encapsulating material is not particularly limited. Any material capable of covering at least a part of the expandable graphite surface can constitute the encapsulating material. Suitably, the encapsulating material is a polymeric material. Preferably, the polymeric material useful for the present invention is a film-forming emulsion (co)polymer composition (sometimes referred to as "latex"). In an embodiment, the encapsulating material is selected from ethylene-vinyl acetate, polyurethane, polyvinyl acetate, poly(meth)acrylates, poly(styrene-(meth)acrylates), poly(styrene-butadiene-(meth)acrylates), styrene-butadiene latex, and mixtures thereof.

Suitable commercially available latices may be selected from Dicrylan AC (available from Huntsman Textile Effects), Supron L6732-1 (available from Weserland), LITEX S 10656 (available from synthomer), and LITEX S 25A10 (available from synthomer).

The engineered wood product of the invention involves a binder which has, at least in localized regions thereof, dispersed therein encapsulated expandable graphite. The engineered wood product may comprise binder which has dispersed therein encapsulated expandable graphite over substantially the entire volume of the binder. Preferably, the engineered wood product comprises the binder which has dispersed therein encapsulated expandable graphite only over localized regions thereof. For example, this refers to an engineered wood product, e.g. a layered engineered wood product, comprising the binder which has dispersed therein encapsulated expandable graphite at one or more outer layer(s). In the case where the outer layer(s) comprise the encapsulated expandable graphite, a protective layer is built up spontaneously and completely on the outer surface of the engineered wood product during firing. This advantageously reduces or even prevents the supply of oxygen and burning and heat release are restricted or even prevented.

### Engineered wood product being a composite structure

Generally, the term "engineered wood product" includes a range of wood products which are manufactured by binding wooden elements such as chips, fibres, flakes, lumber, particles, strands, sawdust, veneer and/or wood flour together, e.g. with a binder. This is also referred to as "gluing together" wooden elements herein. Any known type of engineered wood product is intended in the context of the present invention. For example, the engineered wood product is selected from plywood, particleboard, coarse chipboard, medium-density fibreboard, high-density fibreboard, laminated veneer lumber, and oriented strand board.

Generally, plywood can be manufactured from thin layers (referred to as "plies") of wood veneer which are stacked and glued together. The binder which has dispersed therein expandable graphite encapsulated into an encapsulating material can be contained in the glue line of the plywood.

Generally, laminated veneer lumber (LVL) can be manufactured from multiple layers of thin wood glued together. The binder which has dispersed therein expandable graphite encapsulated into an encapsulating material can be contained in the glue line of laminated veneer lumber.

Generally, particleboards, coarse chipboards, medium-density fibreboards and high-density fibreboards can be manufactured by pressing a mixture of wooden elements and a binder. At least a portion of essentially all of said binder can be the binder which has dispersed therein expandable graphite encapsulated into an encapsulating material.

Generally, oriented strand boards can be manufactured by compressing a mixture of a binder and layers of wood strands in specific orientations. At least a portion or essentially all of said binder can be the binder which has dispersed therein expandable graphite encapsulated into an encapsulating material.

As engineered wood products, inter alia, differ in structure and thickness, the effect and dosage of flame retardants on engineered wood products varies. Generally, expandable graphite is more effective near the surface as it expands in direction of flames and keeps the heat and flames away from the engineered wood product. The ability to expand and cover the surface is particularly present in the top layer of a layered structure.

In an embodiment, the composite structure is a layered composite structure comprising at least two layers. This includes, for example, plywood, or layered composites of particleboard, coarse chipboard, medium-density fibreboard, high-density fibreboard, and oriented strand board. Any of the engineered wood products can also have an additional outer layer which may be applied to at least one layer of plywood, particleboard, coarse chipboard, medium-density fibreboard, high-density fibreboard, and oriented strand board after preparation. The additional outer layer may have a purpose of sealing, decoration, coating etc. The additional outer layer does not impart the flame retarding properties of the engineered wood product. One, more than one or all layers may be glued together with the binder which has dispersed therein expandable graphite encapsulated into an encapsulating material. In an embodiment, at least one layer constituting an outer surface of the composite structure comprises the binder having dispersed therein encapsulated expandable graphite. Preferably, one layer constituting an outer surface of the composite structure comprises the binder having dispersed therein expandable graphite encapsulated into encapsulating material.

The composite structure can also be formed by more than one layer of engineered wood product glued together by the binder having dispersed therein encapsulated expandable graphite. In other words, such composite structures can be formed by subsequent gluing of several engineered wood product layers. The composite structures having more than one layer of engineered wood product can have a thickness of more than 30 mm. Such composite structures advantageously provide a significantly increased fire resistance.

In a preferred embodiment, the composite structure has at least one outer layer, and an inner layer (also referred to as "core layer" herein). In this case, a protective layer is built up spontaneously and completely on the outer surface of the composite structure during firing. This type of layering is especially common for chipboards and medium-density fibreboards. Typically, the total weight of the inner layer is in the range of 50 to 90 wt.-%, preferably 70 to 80 wt.-% and the total weight of the outer layer(s) is in the range of 20 to 50 wt.-%, preferably 20 to 30 wt.-%, relative to the total weight of the composite structure. The amount of encapsulated expandable graphite in the outer layer(s) may be in the range of 2 to 15 wt.-%, preferably 4 to 10 wt.-%, relative to the total weight of the outer layer(s), and the inner layer is preferably essentially free of encapsulated expandable graphite. Thus, the composite structure typically comprises the encapsulated expandable graphite in an amount in the range of 1 to 3 wt.-%, relative to the total weight of the composite structure. Comparable composite structures having ammonium salts as flame retardants would require the ammonium salts in much higher amounts in the range of 12 to 20 wt.-%. Thus, the inventive composite structures allow for significantly lowered dosages of flame retardants at unchanged or even improved flame retardant performance.

Advantageously, the engineered wood product meets the class B combustibility according to EN 13501 meaning that the engineered wood product is considered combustible but has a very limited contribution to fire.

### Method for preparing the engineered wood product

The invention further relates to a method for preparing an engineered wood product, the method comprising the steps of:
a) mixing and/or coating wooden elements with a binder selected from a phenoplast and an aminoplast,
b) assembling the mixed and/or coated wooden elements to form an assembly, and
c) pressing the assembly to obtain the engineered wood product, wherein the binder has, at least in localized regions thereof, dispersed therein expandable graphite encapsulated into an encapsulating material.

Generally, methods for preparing engineered wood products are known to the skilled person.

The above-mentioned embodiments regarding wooden elements, binder, expandable graphite, encapsulating material etc. apply analogously to the method for preparing the engineered wood product.

Step a) can involve mixing wooden elements with the binder. Suitably, this embodiment involves mixing wooden elements selected from chips, fibres, flakes, lumber, particles, strands, sawdust, wood flour, and mixtures thereof with the binder. Mixing of step a) can be conducted in any suitable mixer. Subsequently, step b) involves assembling the resulting mixture, i.e. the mixed wooden elements, to form an assembly in the form of a panel mat. For example, assembling may be carried out using a panel former.

Alternatively, step a) can also involve coating wooden elements with the binder. For example, veneer as wooden element can be coated with the binder. Subsequently, step b) involves assembling coated wooden elements, e.g. coated veneer, to form an assembly in the form of a stack of coated veneers. From such an assembly, plywood can be obtained as engineered wood product after pressing step c).

Step c) of the above-mentioned method involves pressing the assembly to obtain the engineered wood product. Any suitable press known to the skilled person can be used for this purpose. For example, the assembly may be pressed using a cold or hot press. The hot press may be a steam or radio frequency hot press. Suitable pressures applied in step c) of the method for preparing the engineered wood product are in the range of 50 to 90 Nm/cm².

In an embodiment, the method comprises, prior to step a), a step of preparing a pre-mixture comprising the binder and the encapsulated expandable graphite. In other words, this embodiment comprises a distinct step of preparing the pre-mixture before said pre-mixture is added to the wooden elements. Said pre-mixture can then be used in the mixing step a), i.e., step a) involves mixing the pre-mixture with the wooden elements. It has surprisingly been found that compared to a mixture of the binder and untreated expandable graphite, the pre-mixture containing the binder and encapsulated expandable graphite comprises a higher storage stability.

### Method for preparing encapsulated expandable graphite

The invention further relates to a method for preparing encapsulated expandable graphite. The method comprises the steps of:
a) dispersing expandable graphite in an encapsulating agent, the encapsulating agent being selected from a polymer latex, a polymer solution or a polymer melt to obtain a dispersion, and
b) drying the dispersion to obtain the encapsulated expandable graphite.

Generally, the skilled person understands how to carry out dispersing step a) and drying step b). Any suitable means for dispersing expandable graphite in the encapsulating agent, e.g. mixers, and for drying the obtained dispersion can be used.

The method may include using a polymer latex which forms a polymer film. Alternatively, the method may include evaporating a polymer solution, wherein the polymer remains. Alternatively, the process envisages using a polymer melt which is allowed to solidify.

Suitably, the encapsulating agent is selected from ethylene-vinyl acetate, polyurethane, polyvinyl acetate, poly(meth)acrylates, poly(styrene-(meth)acrylates), styrene-butadiene latex, and mixtures thereof.

Drying step b) is suitably carried out by heating the dispersion obtained in step a) under constant agitation at a temperature in the range of 30 to 90 °C, preferably 50 to 80 °C for 0.5 to 2 h, preferably 0.5 to 1 h.

In the method of the invention, agglomerates may be formed. Therefore, the method may further involve a step of pulverizing formed agglomerates. The step of pulverizing may be carried out in a mixer, e.g. by setting a suitable gap size between an agitator and a vessel of the mixer.
Fig. 1 depicts the calorimetric values of particleboard with and without encapsulated expandable graphite.
Fig. 2 depicts the temperature profile of an oriented strand board (OSB) with and without encapsulated expandable graphite.
Fig. 3 depicts the fire resistance properties of plywood with and without encapsulated expandable graphite.

The invention is further illustrated by the accompanied figures and the examples that follow.

### Examples

### Materials

In the context of the following examples, as expandable graphite was used a commercially available product (grade 95100250, available from LIANYUNGANG EAST SUN INTERNATIONAL; and GHL PX 90/80N, available from Georg H. Luh GmbH) having a grain size of 100 to 400 µm.

In the context of some of the following examples, a melamine-urea-formaldehyde resin (MADURIT MW 116/76WA, available from Prefere Melamines GmbH) was used as binder.

In the context of some of the following examples, a phenol-formaldehyde resin (Resol 705703L, available from Prefere Resins Germany GmbH) was used as binder.

### Methods

### Preparation of expandable graphite encapsulated into an encapsulating material ("encapsulated expandable graphite")

5 parts (w/w) of the expandable graphite were placed in a mixer. Then, 1 part (w/w) of the binder Dicrylan AC (anionic acrylate dispersion, available from Huntsman Textile Effects) was added. The resulting dispersion was mixed at 80 rpm for 2 h. Any formed agglomerates were pulverized by setting a suitable gap size between the agitator and the vessel of the mixer. To prevent caking after filling, 1 part (w/w) of aluminum oxide (inert release agent), was added and mixed until completely dispersed. The resulting dispersion was dried at 500 mbar and 50 °C for 0.5 h (weight loss 10%). A free-flowing, greyish powder with a density of 0.51 kg/L was obtained.

### Preparation of particleboard

A chipboard with flame retardant in the top layers was produced. To produce the top layer, 200 g of fine wood chips were placed in a mixer. Then, 20 g of the melamine-urea-formaldehyde resin and 10 g of the encapsulated expandable graphite were added and mixed for 0.5 h. The batch was divided and placed on a press (Schmidt heating press, Model HB 6.3-150, available from Schmidt) in a layered structure (115 g of outer layer, 800 g of coarse middle layer and 115 g of outer layer). The material was pressed at 160 °C and 4 bar for 180 s.

### Preparation of medium-density fibreboard (MDF)

A medium-density fibreboard with flame retardant was produced. 500 g of wood fibres were placed in a mixer. Then, 50 g of the melamine-urea-formaldehyde resin and 40 g of the encapsulated expandable graphite were added and mixed for 0.5 h. The batch was placed on a press (Schmidt heating press, Model HB 6.3-150, available from Schmidt) and pressed at 160 °C and 4 bar for 180 s.

### Preparation of oriented strand board (OSB)

An oriented strand board with flame retardant in the top layers was produced. To produce the top layers, strands having an average length of 20 to 30 mm and a width of 2 to 5 mm were used. 200 g of the strands were placed in a mixer. Then, 20 g of the melamine-urea-formaldehyde resin and 10 g of the encapsulated expandable graphite were added and mixed for 0.5 h. The batch was divided and placed on a press (Schmidt heating press, Model HB 6.3-150, available from Schmidt) in a layered structure (115 g of outer layer, 800 g of coarse strands as core layer and 115 g of outer layer). The material was pressed at 160 °C and 4 bar for 180 s.

### Preparation of plywood

A 28 mm thick plywood panel was made from 11 layers of poplar veneer. The individual veneer layers were glued with the phenol-formaldehyde resin containing 15 wt.-% of encapsulated graphite. In the outer layer, 150 g/m² of ECOAPHOS SFB (available from ecoatech GmbH) was applied as additional flame retardant by curtain coating. The liquid is entirely absorbed by the veneer layer.

### SBI (single burning item) test of engineered wood products with and without encapsulated expandable graphite

SBI (single burning item) tests were carried out in accordance with norm EN 13501. Test specimens with a smooth surface and without openings and cracks having an area of 15 x 15 cm were produced. The test specimen to be examined was fixed vertically and flamed at a distance of 3.5 cm using a horizontally fixed burner. The heated air was directed past a thermal sensor through an exhaust hood. The poorer the flame protection of the test specimen, the more energy is released and the higher the temperature of the exhaust air. In addition, the exhaust air temperature was measured without a test specimen in the same setup (flame only). The temperature difference and the curve of "flame only" and "flame-on-test specimen" were recorded and displayed graphically.

Fire resistance

In accordance with norm DIN EN 1365-1:2013-08 for determining fire resistance, a test specimen was fixed vertically and fitted with 5 thermosensors on the rear side. The test specimen was then flamed horizontally with a burner. By continuously measuring the temperature on the rear side, the time at which the rear side of the test specimen showed a temperature reached 140 °C was measured. The obtained time was used to determine the fire resistance class.

### IB (Internal bond) value

IB values were determined according to EN 319.

### Swelling

Swelling was determined according to norm EN 317.

### Example 1 - SBI of a 20 mm particleboard

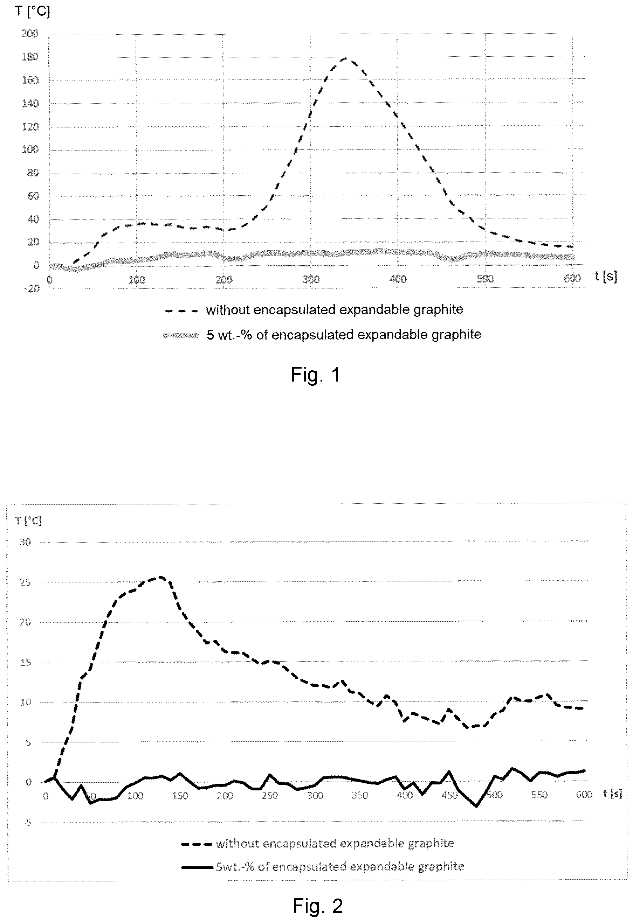

An SBI (single burning item) test was carried out using the particleboard prepared as described above. The results are shown in Fig. 1. It can be seen from the calorimetric values shown in Fig. 1 that advantageously, a significant reduction of energy release was obtained for the particleboard with encapsulated expandable graphite.

### Example 2 - SBI of a 20 mm oriented strand board (OSB)

An SBI (single burning item) test was carried out using the oriented strand board (OSB) prepared as described above. The results are shown in Fig. 2. It can be seen from the temperature profile in Fig. 2 that an advantageous significant reduction of energy release was obtained for the oriented strand board (OSB) with encapsulated expandable graphite.

### Example 3 - Fire resistance properties of plywood

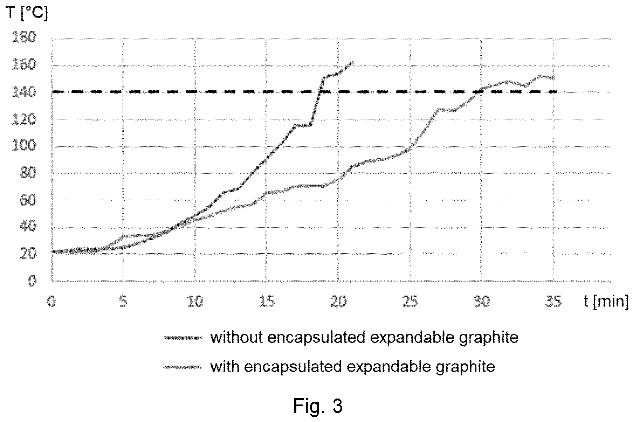

An SBI (single burning item) test was carried out using the poplar plywood prepared as described above. The results are shown in Fig. 3. It can be seen from the temperature profile in Fig. 3 that the plywood prepared using the phenol-formaldehyde resin and the encapsulated expandable graphite reached a temperature of 140 °C after 30 min. In contrast thereto, plywood of the same thickness and made of the same wood, but without the encapsulated expandable graphite reached a temperature of 150 °C after just 19 min.

### Example 4 - Electrostatic adhesion

A balloon is placed over a bowl of untreated expandable graphite and a bowl of encapsulated expandable graphite. The distance between the balloon and the graphite surface was 20 mm. The weight gain of the balloon is measured. The results are depicted in Table 1.

**Table 1.**

| | Untreated expandable graphite* | Encapsulated expandable graphite |
|---|---|---|
| Weihgt balloon before [g] | 2.41 | 2.41 |
| Weihgt balloon after [g] | 2.79 | 2.46 |
| Weight gain [g] / [%] | 0.38 / 16 | 0.05 / 2 |

| | | |
|---|---|---|
| * comparative example | | |

It can be seen from the results shown in Table 1 that less encapsulated expandable graphite than untreated expandable graphite adhered to the balloon. The encapsulated expandable graphite exhibits antistatic properties. Adhesion to equipment or the environment at the workplace can therefore advantageously be avoided.

### Example 5 - Binder stability

Two binder mixtures were prepared by mixing the following components:
- 1000 g of the phenol-formaldehyde resin,
- 200 g of untreated expandable graphite or encapsulated expandable graphite,
- 40 g of a hardener, and
- 150 g of inert additive Al₂O₃ (chalk, available from Polcarb), for adjusting viscosity.

The viscosity of the binder mixture was adjusted to 2500 to 3500 cP. The settling behaviour of the binder mixture was determined. For this purpose, the amount of sediment in the binder mixture with untreated expandable graphite vs. in the binder mixture with encapsulated expandable graphite was determined after letting the binder mixtures stand in beakers for 1 h, 2 h and 48 h. The results are shown in Table 2.

**Table 2.**

| | Untreated expandable graphite [%]* | Encapsulated expandable graphite [%] |
|---|---|---|
| 1 h | 18 | 10 |
| 2 h | 29 | 10 |
| 48 h | 47 | 10 |

| | | |
|---|---|---|
| * comparative example | | |

It can be seen from the results shown in Table 2 that less sediment was obtained in the binder mixture with encapsulated expandable graphite than in the binder mixture with untreated expandable graphite. Thus, binder mixtures with encapsulated expandable graphite have a higher storage stability than binder mixtures with untreated expandable graphite known from the prior art.

### Example 6 - Dust reduction

A tray with untreated expandable graphite vs. encapsulated expandable graphite was exposed to the air flow of a fan at level 1 for 1 min. It was analysed how much graphite is removed by the air flow. The results are shown in Table 3.

**Table 3.**

| | Untreated expandable graphite* | Encapsulated expandable graphite |
|---|---|---|
| Graphite remaining [%] | 7 | 100 |

| | | |
|---|---|---|
| * comparative example | | |

It can be seen from the results shown in Table 3 that significantly less encapsulated expandable graphite was removed by the air flow than untreated expandable graphite.

### Example 7 - Particle size

Particle size distributions of untreated expandable graphite and encapsulated expandable graphite were determined by sieving. The results are shown in Table 4.

**Table 4.**

| | Untreated expandable graphite* [wt.-%] | Encapsulated expandable graphite [wt.-%] |
|---|---|---|
| < 0.3 mm | 19 | 1 |
| 0.3 to 0.45 mm | 78 | 2 |
| 0.45 to 0.9 mm | 3 | 86 |
| 0.9 to 2 mm | 0 | 11 |

| | | |
|---|---|---|
| * comparative example | | |

### Example 8 - Mechanical properties and swelling

Mechanical properties and swelling of the medium-density fibreboard (MDF) prepared as described above (containing encapsulated expandable graphite) was investigated. The results were compared with a medium-density fibreboard (MDF) containing 10 wt.-% of ammonium sulfate (available from ChemSolute) as flame retardant. The results are shown in Table 5.

**Table 5.**

| | MDF containing ammonium sulfate* | MDF containing enc. exp. gra.^{[1]} |
|---|---|---|
| IB [N/mm²] | 30 | 100 |
| Swelling [%] | 65 | 30 |
| Weight loss during firing | 12% | 13% |

| | | |
|---|---|---|
| [1] Encapsulated expandable graphite * comparative example | | |

It can be seen from the results shown in Table 5 that the mechanical properties (bond strength) of the medium-density fibreboard with ammonium sulfate drop sharply compared to the medium-density fibreboards with encapsulated expandable graphite. The swelling of the medium-density fibreboard with ammonium sulfate also increases significantly compared to the medium-density fibreboards with encapsulated expandable graphite (by factor two). Lower swelling is desirable for an improved stability of the fibreboard.

### Example 9 - Optical properties

Medium-density fibreboards (MDF) containing 0 wt.-% (comparative), 20 wt.-% and 40 wt.-% of encapsulated expandable graphite were prepared as described above. The resulting medium-density fibreboards were investigated for their optical properties, especially for the occurrence of stain formation. All medium-density fibreboards showed good optical properties. Stain formation did not occur showing that the encapsulated expandable graphite particles were distributed homogeneously; formation of graphite-clusters did not occur.

### Example 10 - pH value

An aqueous suspension comprising 10 wt.-% of untreated expandable graphite, and an aqueous suspension comprising 10 wt.-% of encapsulated expandable graphite was prepared. The pH values of the suspensions were determined after letting the suspensions stand in beakers for 1 h. The results are shown in Table 6.

**Table 6.**

| | Untreated expandable graphite* | Encapsulated expandable graphite |
|---|---|---|
| pH | 5 to 8 | 8 to 10 |

| | | |
|---|---|---|
| * comparative example | | |

## Claims

1. An engineered wood product comprising wooden elements glued together using a binder to obtain a composite structure, the binder being selected from a phenoplast and an aminoplast, wherein the binder has, at least in localized regions thereof, dispersed therein expandable graphite encapsulated into an encapsulating material.

2. The engineered wood product of claim 1, wherein the wooden elements include chips, fibres, flakes, lumber, particles, strands, sawdust, veneer, wood flour, and mixtures thereof.

3. The engineered wood product of claim 1 or 2, being selected from plywood, particleboard, coarse chipboard, medium-density fibreboard, high-density fibreboard, laminated veneer lumber, and oriented strand board.

4. The engineered wood product of any one of the preceding claims, wherein the composite structure is a layered composite structure comprising at least two layers.

5. The engineered wood product of any one of the preceding claims, wherein at least one layer constituting an outer surface of the composite structure comprises the binder having dispersed therein expandable graphite encapsulated into the encapsulating material.

6. The engineered wood product of any one of the preceding claims, wherein the phenoplast is a phenol-formaldehyde resin.

7. The engineered wood product of any one of the preceding claims, wherein the aminoplast is selected from urea-formaldehyde resins, melamine-formaldehyde resins, and mixtures thereof.

8. The engineered wood product of any one of the preceding claims, wherein the expandable graphite has a grain size of 100 to 400 µm.

9. The engineered wood product of any one of the preceding claims, wherein the encapsulating material is selected from ethylene-vinyl acetate, polyurethane, polyvinyl acetate, poly(meth)acrylates, poly(styrene-(meth)acrylates), styrene-butadiene latex, and mixtures thereof.

10. The engineered wood product of any one of the preceding claims, meeting class B combustibility according to EN 13501.

11. A method for preparing an engineered wood product, the method comprising the steps of:
a) mixing and/or coating wooden elements with a binder selected from a phenoplast and an aminoplast,
b) assembling the mixed and/or coated wooden elements to form an assembly, and
c) pressing the assembly to obtain the engineered wood product,
wherein the binder has, at least in localized regions thereof, dispersed therein expandable graphite encapsulated into an encapsulating material.

12. The method of claim 11, comprising, prior to step a), a step of preparing a pre-mixture comprising the binder and expandable graphite encapsulated into the encapsulating material.

13. A method for preparing encapsulated expandable graphite, the method comprising the steps of:
a) dispersing expandable graphite in an encapsulating agent, the encapsulating agent being selected from a polymer latex, a polymer solution or a polymer melt to obtain a dispersion, and
b) drying the dispersion to obtain the encapsulated expandable graphite.

14. The method of claim 13, wherein the encapsulating agent is selected from ethylene-vinyl acetate, polyurethane, polyvinyl acetate, poly(meth)acrylates, poly(styrene-(meth)acrylates), styrene-butadiene latex, and mixtures thereof.
